# EUROPEAN PATENT SPECIFICATION

(11) **EP 2 527 641 B1**
(45) Date of publication and mention of the grant of the patent: **23.10.2013**
(21) Application number: 10707557.4
(22) Date of filing: 21.01.2010
(51) Int. Cl.: F03B 13/20

(54) **BALANCE WAVE-ENERGY ELECTRICITY GENERATION SYSTEM**
AUF BALANCE BASIERENDES WELLENKRAFTKWERK
SYSTÈME DE GÉNÉRATION D'ÉNERGIE ÉLECTRIQUE HOULOMOTRICE FAISANT APPEL AU BALANCEMENT

(43) Date of publication of application: 28.11.2012
(73) Proprietor: Echenique Gordillo, Iñigo, 28043 Madrid (ES)
(72) Inventor: Echenique Gordillo, Iñigo, 28043 Madrid (ES)
(74) Representative: Pons Ariño, Angel
(86) International application number: PCT/ES2010/070035
(87) International publication number: WO 2011/089280

(56) References cited:
- EP-A1- 1 439 306
- FR-E- 27 547
- US-A- 2 089 064
- US-A- 4 317 047
- US-A1- 2009 008 942

## Description

The present invention relates to the technical field of renewable energies, more specifically to wave energy.

The object of the invention pertains to the sea wave-powered electricity generation sector.

### BACKGROUND OF THE INVENTION

Within the search for renewable and non-contaminating energy sources, as an alternative to that obtained from hydrocarbons, that obtainable from waves or wave energy is an interesting option, partly due to its potential in terms of global available power and to having, based on each geographic location, a predictable nature at certain time intervals.

The use of wave energy is still at an incipient stage of development, in comparison to that of other renewable energy sources such as wind or solar power. Even so, a large number of systems have been devised and patented for this purpose. These can be classified as follows:
1. Based on site type:
   - Permanently established on the coast.
   - Floating, anchored to the seabed by a mooring line.
   - Anchored to the seabed with a mobile part.
2. Based on the method used to transform wave energy:
   - Hydraulic raising systems:
      These devices are based on the use of the potential energy of a mass of water raised by wave motion and converted into electricity by a turbine.

They can be of the floating type or permanently established on the coast. The device disclosed in patent GB2436595 belongs to the first type, as in the case of the system known as Wave Dragon.
- Gravitational:
   Those that use wave-induced vertical movement in one or several floaters or buoys to actuate electric generators or store the energy for subsequent transformation thereof by means of hydraulic, pneumatic or mechanical systems.

Those disclosed in patents GB 2434620 A, EP 1439306 A1, WO2007/086750 A1 and DE 3642060 A1 belong to this type, as in the case of the Pelamis OPD and AWS systems.
- Displacement:
   These types of systems are based on the kinetic energy of the wave, which acts on plates or pallets or compresses an air mass.

Patents DE102006024042 A1, US 2007/0081861 A1, US 2007/015463 A1 disclose systems based on this principle, as in the case of the Wave Roller and Oyster systems and those based on OWC (Oscillating Water Column) technology.

Document US4317047 discloses an oscillating wave-powered electricity generation system according to the preamble of claim 1.

The desired characteristics for a wave-powered electricity generation system are the following:
- Efficient capture and transformation of wave energy.
- Robustness of the assembly in extreme wave conditions.
- Mechanical simplicity.
- Capacity to adapt to variations in wave characteristics.
- Easy to install.
- Minimum alteration of the marine environment.

### DESCRIPTION OF THE INVENTION

The present invention is based on a self-supporting system that solves the previously described problems by leveraging the roll movement of a ship or floating vessel caused by the action of the waves that act at an angle approximately transversal to the main dimension thereof, which is determined in its physical characteristics by different parameters derived from the geometry, mass and vertical position of the centre of gravity of said ship or floating vessel. For a defined geometry, weight and position of the centre of gravity, each specific ship or floating vessel has a natural roll period wherewith it freely rolls when subject to external moment that upsets its balance. The maximum oscillation of the vessel due to the action of the waves is obtained when the natural period of the vessel is in synchronism with that of the waves acting thereupon; wave-energy capture is consequently greater under these conditions. Roll energy is related to the period, the maximum angle obtained and the righting moments in the course thereof. The present invention seeks to optimally leverage said energy of the vessel subject to wave-driven roll.

The object of the invention is based on the capture of wave-driven roll energy produced in a floating vessel or hull through the movement of one or several masses disposed in the interior thereof, and displaced in synchronism with the roll movement of said vessel. The dimensions, geometry and centre of gravity of the floating element are optimised to produce maximum oscillation amplitude by approximating the natural roll period of the hull and predominant wave period, with the object of obtaining near-resonance conditions. The displacement of the centre of gravity of the weights may be linear in a plane perpendicular to the roll axis or pendulous along an axis parallel thereto. The path of the weight is adjusted to obtain maximum efficiency in the energy obtained from its displacement and in accordance with the mechanism used for such purpose. In each roll movement of the floating vessel, each weight will be displaced by the action of gravity, either along rails in the direction of the beam, i.e. the smallest dimension of the vessel, or in a pendulous movement along a fixed axis. This energy is captured as a result of the pressure exerted by the weight on a hydraulic cylinder, directly or through a lever or connecting rod. The compressed hydraulic fluid actuates, through a circuit which includes accumulators and regulating valves, a hydraulic engine that is in turn coupled to an alternator that generates the electricity.

The circuit route and pressure are adjusted to optimally leverage the energy by means of a control unit and processor that receives a signal of the movement by means of an electronic inclinometer.

As an alternative to the aforementioned energy-leveraging means that incorporate hydraulic actuation, the system can incorporate pneumatic or mechanical-type actuation means composed of driving chains or belts, using pulleys, gears, clutches and reducers to actuate the alternator.

The natural roll period of the floating vessel is inversely proportional to the square root of the metacentric radius which, in turn, depends on the ordinate of the centre of gravity. In order to regulate the natural roll period of the vessel, approximating it to that of the waves, the position of the centre of gravity is automatically varied by transferring water to tanks disposed at different heights using an electric pump.

The position of the vessel that contains the system is maintained by two or more mooring lines, preferably anchored at their longitudinal ends and composed of chains fixed to an anchor or deadweight on the seabed. Considering that the optimum condition for maximum roll is reached when the predominant waves are incident transversely on the vessel, the mooring lines may be adjusted to achieve the adequate position with respect to variation in the direction thereof by heaving or hauling up the chain using a winch or windlass.

The system that is the object of the invention offers the following additional advantages:
- Compact external system without mobile parts sensitive to the action of the sea, which represents less maintenance and possibilities of failure. This peculiarity, very advantageous considering the variability of environmental conditions is, in itself, a unique characteristic compared to the existing ones.
- Possibility of being installed in breaker bars next to seaports in turbulent marine zones due to which, in addition to its electricity generation function, the system can also be used as a wave buffer.
- Adaptation to wave conditions in order to optimise energy production as a consequence of the increase in roll amplitude.

### DESCRIPTION OF THE DRAWINGS

In order to complement this description and with the object of helping to better understand the characteristics of the invention, according to a preferred example of practical embodiment thereof, a set of drawings has been included as an integral part of said description, wherein the following have been represented in an illustrative and non-limiting manner:
Figure 1a shows a cross-section of the system adapted to the linear movement of the weight.
Figure 1b shows a cross-section of the system adapted to the linear movement of the weight in a final position of its oscillatory movement.
Figure 2a shows a cross-section of the system adapted to the pendulous movement of the weight.
Figure 2b shows a cross-section of the system adapted to the pendulous movement of the weight in a final position of its oscillatory movement.

### PREFERRED EMBODIMENT OF THE INVENTION

In view of the foregoing figures, two examples by way of preferred embodiment of the object of the invention are described below.

### Example 1

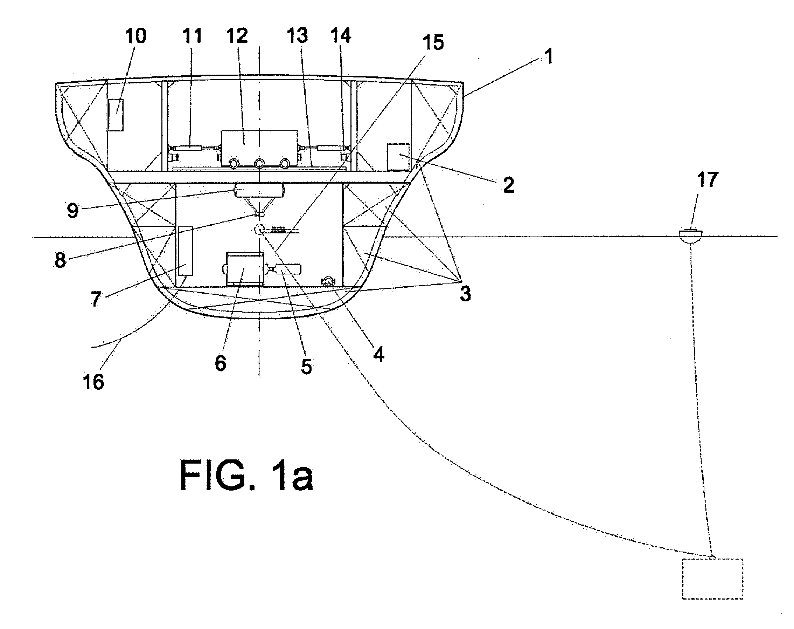

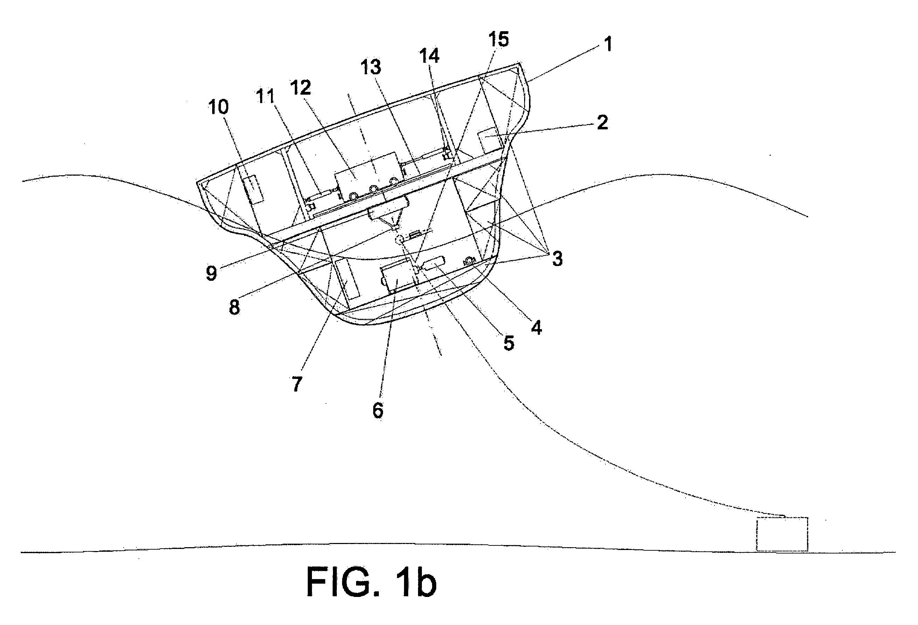

Figure 1a shows a cross-section of the system and represents a floating vessel (1) which can be built of steel, fibreglass-reinforced polyester, aluminium or reinforced concrete, depending on the weight and production requirements of the assembly. The shape of the cross-section is extended in order to increase the righting torque with the heel. It has a sealed deck that makes the assembly watertight and protects it from inclement weather. Different compartments have been disposed by way of water tanks (3) with the object of allowing variations in the centre of gravity and consequently vary the natural oscillation period of the floating vessel. Filling with and transfer of water is carried out using a pump (4) and a collector, pipe and electrovalve assembly. One or several straight or slightly curved metal rails (13), whereon a mobile weight (12) that moves thereover by means of wheels, are transversely disposed in the interior of the floating vessel (1). When the ship rolls due to wave action, the weight moves along the rail, acting upon hydraulic cylinders (11), exerting pressure thereon, its piston displacing a certain amount of hydraulic fluid, thereby generating certain power. Figure 1b shows the system in roll mode. Stops (14) are disposed at the rail ends while energetic use means are incorporated in the system, in this example hydraulic means having a hydraulic circuit that includes pressure valves and compensators (2), in addition to an accumulator (9) to provide constant power over a certain period of time and a hydraulic engine (5) connected to an alternator (6) to produce electric current. This current is transformed by a transformer (7) and sent to shore via an underwater cable (16). An electronic inclinometer (8) disposed in the manner of a roll sensor on the central gangway of the floating vessel (1) transmits information relative to the angle of roll and its variation over time to a control unit (10) that is in charge of regulating certain system variables. The floating vessel (1) is anchored to the seabed by two mooring lines (15) that include electric windlasses or conventional winches, which can be automatically actuated, to adjust the position of the vessel with respect to that of the waves. For the purpose of obtaining accurate information relative to the wave front, the generator may also have a floating sensor (17) that captures and transfers information relative to wave height and period.

### Example 2

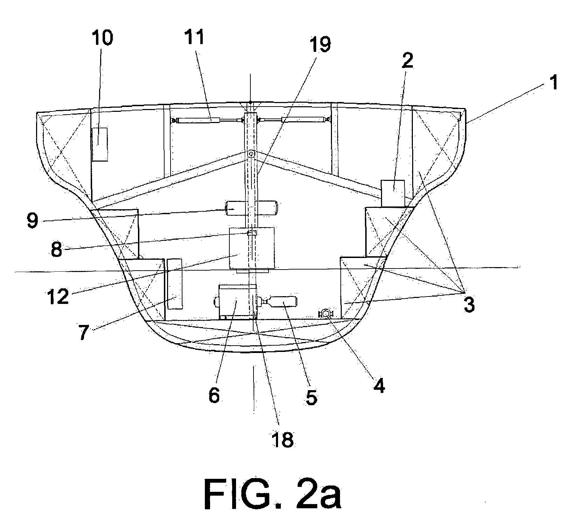

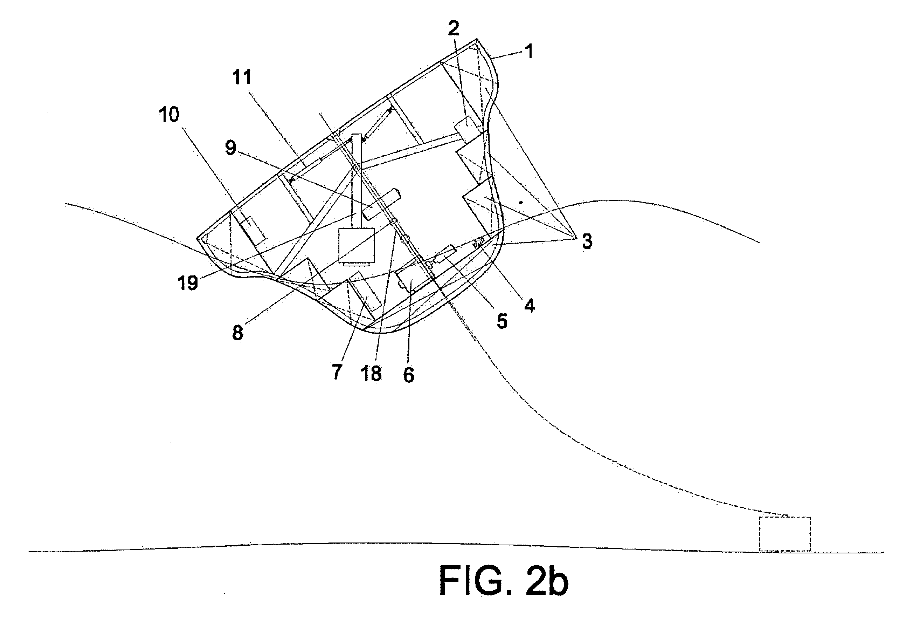

Figures 2a and 2b show the same system with a variation in the position of the mobile weight (12), which in this case carries out a pendulous oscillating movement around a rod (18). As shown in Figure 2a, the hydraulic cylinders (11) are actuated by the lever effect of the support arm (19) of the weight (12). The vertical position of the weight (12) may be adjusted by moving it along its support arm using mechanical or hydraulic means. Otherwise, operation of the system is similar to that described in Example 1. Figure 2b shows the system in operation with the floating vessel (1) in roll mode and the arm (19) acting upon the hydraulic cylinders (11).

## Claims

1. Oscillating wave-powered electricity generation system that comprises:
- a floating vessel (1) anchored to the seabed by at least one mooring line (15) coupled to electric windlasses destined for adjusting the position of the floating vessel (1) with respect to that of the waves,
- at least one mobile weight (12) in charge of acting upon energetic use means,
- an alternator (6) associated to the energy use means destined for generating electricity as of the energy it receives from said energetic use means,
- a transformer (7) in charge of transforming the electric current generated by the alternator,
- hydraulic cylinders (11) destined for absorbing the energy produced by the movement of the mobile weight (12), disposed in connection with the energetic use means in order to transmit said energy, and
- an accumulator (9) connected to the energetic use means in charge of receiving and accumulating the energy produced by these and transmitting it to the alternator (6),
**characterised in that** it comprises:
- a pump (4) in charge of filling/emptying water tanks (3) disposed in the interior of the floating vessel (1) for the purpose of varying the vertical position of its centre of gravity, and
- a control unit (10) in charge of regulating the electric windlasses, energetic use means and pump (4) in order to control the natural roll period of the floating vessel (1), determined by a roll sensor (8) connected to the control unit (10), with the object of approximating it to that of the predominant waves.

2. System, according to claim 1, **characterised in that** the mobile weight (12) is displaceable with alternative movement along rails (13) and acts upon the hydraulic cylinders (11) disposed on either side of the mobile weight (12).

3. System, according to claim 2, **characterised in that** it additionally comprises stops (14) disposed at the rail (13) ends destined for limiting the movement of the mobile weight (12) in both directions.

4. System, according to claim 1, **characterised in that** it additionally comprises a rod (18) associated to the floating vessel (1) having an articulation.

5. System, according to claim 4, **characterised in that** the mobile weight (12) is associated to an arm (19) that articulates with respect to the articulation of the rod (18) with a pendulous movement over said rod (18), wherein said arm (19) is disposed in association with the hydraulic cylinders (11) in such a manner that the pendulous movement of the mobile weight (12) determines the internal displacement of said hydraulic cylinders (11).

6. System, according to any one of the preceding claims, **characterised in that** the energetic use means comprise a hydraulic circuit connected to the hydraulic cylinders (11), which comprises pressure valves and compensators (2).

7. System, according to any one of claims 1 to 5, **characterised in that** the energetic use means comprise a pneumatic circuit connected to the hydraulic cylinders (11) that comprises pressure valves and compensators (2) and the accumulator (9).

8. System, according to any one of claims 1 to 5, **characterised in that** the energetic use means comprise a mechanical device connected to the hydraulic cylinders (11) that comprises connecting rods, cams and/or a chain or belt transmission and the accumulator (9).

9. System, according to any one of the preceding claims, **characterised in that** it additionally comprises an underwater cable (16) destined for distributing the electric current transformed by the transformer (7).

## Patentansprüche

1. Schwingendes Wellenstrom-Erzeugungssystem, das Folgendes umfasst:
- einen schwimmenden Behälter (1), der mit zumindest einem Haltetau (15) am Meeresboden vertäut ist, das mit elektrischen Ankerwinden verbunden ist, die dazu dienen, die Position des schwimmenden Behälters (1) auf die Wellenrichtung einzustellen"
- mindestens ein mobiles Gewicht (12), das dazu dient, auf energetische Verwendungsmittel zu wirken,
- ein Generator (6), der mit den energetischen Verwendungsmitteln verbunden ist, und dazu dient aus der Energie, die er von den energetischen Verwendungsmitteln erhält, Strom zu erzeugen,
- ein Transformator (7), der dazu dient, den vom Generator erzeugten Strom umzuformen,
- hydraulikzylinder (11) zur Aufnahme der durch die Bewegung des mobilen Gewichts (12) erzeugten Energie, der mit den energetischen Verwendungsmitteln verbunden ist, um diese Energie zu übertragen, und
- einen Speicher (9), der mit den energetischen Verwendungsmitteln verbunden ist, und dazu dient, die von diesen erzeugte Energie aufzunehmen und zu speichern, und sie auf den Generator (6) zu übertragen, **dadurch gekennzeichnet, dass** es Folgendes umfasst:
- eine Pumpe (4), die dazu dient, Wasserbehälter (3) zu füllen/leeren, die auf der Innenseite des schwimmenden Behälters (1) angeordnet sind und dazu dienen, die vertikale Lage seines Schwerpunkts zu verändern, und
- eine Steuereinheit (10), die dazu dient, die elektrischen Ankerwinden, energetischen Verwendungsmittel und Pumpe (4) zu regulieren, um die natürliche Rollphase des schwimmenden Behälters (1) zu steuern, was mittels eines Rollsensors (8) erfolgt, der mit der Steuereinheit (10) verbunden ist, um ihn an die Rollphase der vorherrschenden Wellen anzupassen.

2. System gemäß Anspruch 1, **dadurch gekennzeichnet, dass** das mobile Gewicht (12) mit hin und her Bewegungen entlang von Schienen (13) beweglich ist und auf die Hydraulikzylinder (11) wirkt, die auf jeder Seite des mobilen Gewichts (12) angeordnet sind.

3. System gemäß Anspruch 2, **dadurch gekennzeichnet, dass** es außerdem Anschläge (14) an den Enden der Schiene (13) verfügt, die dazu dienen, die Bewegung des mobilen Gewichts (12) in beide Richtungen zu begrenzen.

4. System gemäß Anspruch 1, **dadurch gekennzeichnet, dass** es außerdem eine Stange (18) umfasst, die mit dem schwimmenden Behälter (1) verbunden ist, und ein Gelenk aufweist.

5. System gemäß Anspruch 4, **dadurch gekennzeichnet, dass** das mobile Gewicht (12) mit einem Arm (19) verbunden ist, der es gelenkig mit dem Gelenk der Stange (18) mit einer pendelförmigen Bewegung über diese Stange (18) verbindet, wobei der Arm (19) so mit den Hydraulikzylindern verbunden ist, dass die Pendelbewegung des mobilen Gewichts (12) die interne Verschiebung der Hydraulikzylinder (11) bestimmt.

6. System gemäß einem der vorherigen Ansprüche, **dadurch gekennzeichnet, dass** die energetischen Verwendungsmittel einen Hydraulikkreislauf umfassen, der mit den Hydraulikzylindern (11) verbunden ist, und der Druckventile und Kompensatoren (2) aufweist.

7. System gemäß einem der Ansprüche 1 bis 5, **dadurch gekennzeichnet, dass** die energetischen Verwendungsmittel einen Pneumatikkreislauf umfassen, der mit den Hydraulikzylindern (11) verbunden ist, und der Druckventile und Kompensatoren (2) und den Speicher (9) aufweist.

8. System gemäß einem der Ansprüche 1 bis 5, **dadurch gekennzeichnet, dass** die energetischen Verwendungsmittel eine mechanische Vorrichtung aufweisen, die mit den Hydraulikzylindern (11) verbunden ist, und Druckstangen, Nocken und/oder einen Ketten- oder Riemenantrieb und den Speicher (9) umfasst.

9. System gemäß einem der vorherigen Ansprüche, **dadurch gekennzeichnet, dass** es außerdem ein Unterwasserkabel (16) aufweist, das zur Leitung des elektrischen Stroms dient, der vom Transformator (7) umgeformt wurde.

## Revendications

1. Système oscillant de production d'électricité mû par les vagues qui comprend :
- une cuve flottante (1) ancrée au fond marin par au moins une ligne d'amarrage (15) couplée à des guindeaux électriques destinés au réglage de la position de la cuve flottante (1) par rapport à celle des vagues,
- au moins un poids mobile (12) chargé d'agir sur des moyens d'utilisation de l'énergie,
- un alternateur (6) associé aux moyens d'utilisation de l'énergie destiné à générer de l'électricité à partir de l'énergie qu'il reçoit desdits moyens d'utilisation de l'énergie,
- un transformateur (7) chargé de transformer le courant électrique généré par l'alternateur,
- des cylindres hydrauliques (11) destinés à absorber l'énergie produite par le mouvement du poids mobile (12), disposés en connexion avec les moyens d'utilisation de l'énergie afin de transmettre ladite énergie, et
- un accumulateur (9) connecté aux moyens d'utilisation de l'énergie chargé de recevoir et d'accumuler l'énergie produite par ces derniers et de la transmettre à l'alternateur (6), **caractérisé en ce qu'**il comprend :
- une pompe (4) chargée de remplir/vider des réservoirs d'eau (3) disposés à l'intérieur de la cuve flottante (1) dans le but de faire varier la position verticale de son centre de gravité, et
- une unité de contrôle (10) chargée de réguler les guindeaux électriques, les moyens d'utilisation de l'énergie et la pompe (4) afin de contrôler la période de roulis naturelle de la cuve flottante (1), déterminée par un capteur de roulis (8) connecté à l'unité de contrôle (10), dans le but de la rapprocher de celle des vagues prédominantes.

2. Système, selon la revendication 1, **caractérisé en ce que** le poids mobile (12) est déplaçable avec un mouvement alternatif le long de rails (13) et agit sur les cylindres hydrauliques (11) disposés des deux côtés du poids mobile (12).

3. Système, selon la revendication 2, **caractérisé en ce qu'**il comprend en outre des butées d'arrêt (14) disposées aux extrémités de rails (13) destinées à limiter le mouvement du poids mobile (12) dans les deux sens.

4. Système, selon la revendication 1, **caractérisé en ce qu'**il comprend en outre une tige (18) associée à la cuve flottante (1) possédant une articulation.

5. Système, selon la revendication 4, **caractérisé en ce que** poids mobile (12) est associé à un bras (19) qui est articulé par rapport à l'articulation de la tige (18) avec un mouvement pendulaire sur ladite tige (18), dans lequel ledit bras (19) est disposé en association avec les cylindres hydrauliques (11) de telle façon que le mouvement pendulaire du poids mobile (12) détermine le déplacement interne desdits cylindres hydrauliques (11).

6. Système, selon n'importe laquelle des revendications précédentes, **caractérisé en ce que** les moyens d'utilisation de l'énergie comprennent un circuit hydraulique connecté aux cylindres hydrauliques (11), qui comprend des vannes de pression et des compensateurs (2).

7. Système, selon n'importe laquelle des revendications 1 à 5, **caractérisé en ce que** les moyens d'utilisation de l'énergie comprennent un circuit pneumatique connecté aux cylindres hydrauliques (11), qui comprend des vannes de pression et des compensateurs (2) et l'accumulateur (9).

8. Système, selon n'importe laquelle des revendications 1 à 5, **caractérisé en ce que** les moyens d'utilisation de l'énergie comprennent un dispositif mécanique connecté aux cylindres hydrauliques (11), qui comprend des tiges de connexion, des cames et/ou une transmission par chaîne ou courroie et l'accumulateur (9).

9. Système, selon n'importe laquelle des revendications précédentes, **caractérisé en ce qu'**il comprend en outre un câble immergé (16) destiné à distribuer le courant électrique transformé par le transformateur (7).
